# EUROPEAN PATENT SPECIFICATION

(11) **EP 0 749 649 B1**
(45) Date of publication and mention of the grant of the patent: **27.01.1999**
(21) Application number: 95910674.1
(22) Date of filing: 10.03.1995
(51) Int. Cl.: H04H 1/00, H04L 5/06

(54) **DIGITAL BROADCAST SYSTEMS FOR LOCAL TRANSMISSIONS**
DIGITALE RUNDFUNKSYSTEME FUR LOKALE ÜBERTRAGUNGEN
SYSTEMES DE RADIODIFFUSION NUMERIQUE DESTINE A DES TRANSMISSIONS LOCALES

(30) Priority: 11.03.1994 GB 9404755
(43) Date of publication of application: 27.12.1996
(73) Proprietor: BRITISH BROADCASTING CORPORATION, London W1A 1AA (GB)
(72) Inventor: MADDOCKS, Mark, Charles, Dobell, Tadworth Surrey KT20 6NP (GB)
(74) Representative: Cozens, Paul Dennis
(86) International application number: GB9500536
(87) International publication number: WO9524780

(56) References cited:
- EP-A- 0 568 516
- WO-A-92/13403
- WO-A-93/09616
- WO-A-93/11616

## Description

This invention relates to digital broadcast systems for local transmissions and particularly applicable to digital audio broadcast (DAB) systems which can be used for local radio transmissions.

The Eureka 147 DAB system which has been proposed as a practical implementation of digital audio broadcasting operates by using a coded orthogonal frequency division multiplexed (COFDM) system. In this a large number of carriers are spread over a broad frequency band to carry digital data. Each carrier is modulated so as to carry two bits of data by using quadrature phase shift keying (QPSK). Groups of these carriers are then transformed to the time domain by a fast fourier transform to produce what is known as a DAB symbol. A plurality of these symbols are assembled and between them are able to carry data from a large number of channels. The symbols are transmitted together in a DAB frame or multiplex which commences and terminates with a null symbol for synchronisation. This has a transmission bandwidth of about 1.5 MHz and can typically accommodate 5 or 6 channels.

Within a network, all transmitters are synchronised and operate on the same frequency and so the problems associated with current FM transmissions where frequencies change between adjacent transmitters are not encountered. Signals received from two adjacent transmitters add constructively rather than causing interference. This generally leads to an enhanced reception.

The Eureka DAB system has been developed on the basis that the single frequency network will give spectrally efficient coverage of a set of programs over a large area. However, many radio broadcasters have local coverage areas which are not ideally suited to the single frequency approach. If conventional frequency planning were used for implementation of local radio services in a DAB single frequency network at least 4 to 6 1.5MHz bandwidth channels would be required to ensure that there was no cross interference between adjacent local radio transmitters. Problems arise because there is often more than one local radio station in each area. For example, in a medium size town there may be as many as five or six different local broadcasters who have to be accommodated. These would all have to be included in a non-interfering manner within the same chunk of spectrum allocated to the particular local area.

A time windows approach to local radio transmissions in DAB uses a network of co-channel transmitters with different data radiated in different parts of a DAB multiplex in different parts of the single frequency network. In other words, different radio services can be inserted into the same part of the DAB multiplex in different areas. A COFDM DAB frame commences with a null symbol and a phase reference symbol. This is followed by symbols containing fast information channel data. This information is common to all transmitters and contains information concerning the location of a channel in the succeeding symbols as well as information concerning the audio rate and coding rate used for the data. This is followed by a plurality of DAB symbols. The first group of these are allocated a channel. This group will be used to transmit, for example, local radio service A in area A. The remainder of the frame is comprised of symbols carrying other local radio services or national services.

In a second area B the DAB symbols allocated to channel A in area A are used to transmit data for local radio service B. Thus it can be appreciated that there is no cross-channel interference providing area A and B are geographically separated. Difficulties arise at boundaries between transmitters where there will be interference.

In cases where a receiver gets a signal from more than one transmitter and the data is the same, the single frequency network approach works. When the data is different then interference occurs.

For such a time windows approach to operate, it should be arranged for transitions between different audio services to occur at QPSK symbol boundaries. Also, the same audio data rate and code rate must be used for all services which share a common time slot so that the reference symbols and data contained therein remains the same and correct from each transmitter. Consequently, this information will have to be kept very general.

The main problem involved with the time windows approach to local radio DAB broadcast is that symbols left unused by a particular transmitter will be detected as null symbols by receivers. Therefore, using the approach requires local broadcasters to all use the same transmitter so that the COFDM frame will be filled with data, i.e. all the local services are multiplexed together prior to transmission.

Preferred embodiments of the present invention enable the time windows approach to be extended to allow unused DAB symbols in the multiplex to be transmitted without data.

An embodiment of the invention will now be described in detail, by way of example, with reference to the accompanying drawings in which:-
**Figures 1 and 2** show representations of extended time windowed signals embodying the invention;
**Figure 3** shows the frequency spectrum of a DAB symbol which contains data; and
**Figure 4** shows the frequency spectrum of a DAB symbol carrying no data for use in an embodiment of the invention.

We have appreciated that the time windows approach can be extended to allow unused symbols in the multiplex to be transmitted without carrying any data. This is achieved in such a way as to prevent interference with signals broadcast in that time slot from adjacent transmitters by turning off the majority of the carriers used for DAB data. This has to be done, however, in such a way that receivers do not erroneously mistake the empty symbols for null symbols. If they did, this would lead to problems in synchronisation. Difficulty arises because any power radiated will, of course, cause interference to the services trying to use that particular time window from adjacent transmitters. We have appreciated that the interference can be minimised by concentrating the power required in a few carriers. The interference effect would then be to "puncture" a few carriers. Ideally, a single carrier would be used but in practice it is better to transmit the power on a number of carriers spaced across the bandwidth to ensure that power is not lost due to multi-path interference. The number of carriers used is selected with a knowledge of the audio and coding parameters so that the effects of interference are minimised.

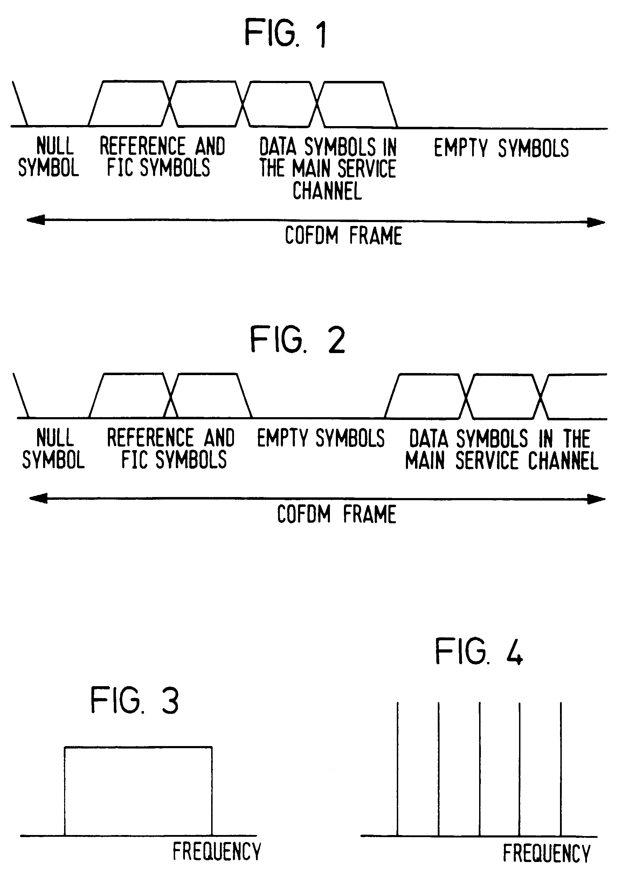

In the situation shown in Figure 1, the time domain representation of a COFDM signal is shown with valid data transmitted in only the first two data symbols in the main service channel. The remaining symbols have to be supplied with sufficient power not to be detected as null symbols. Figure 3 shows a typical spectrum for one of the symbols carrying data for channel A. Figure 4 shows the spectrum of one of the empty symbols which do not carry data for channel A. As can be seen, a number of discrete carriers are included, each with a higher power than is used for carriers which carry data. This power is sufficiently high to prevent the symbols from being detected as null symbols when transformed to the time domain. The time domain representation of a signal from an adjacent transmitter B shown in Figure 2 uses the time slot left vacant by the first transmitter to transmit data representing a local radio channel B. There will be some interference with this data from the carriers used in empty symbols on transmitter A. Because only a few carriers are used, the amount of data lost will be small and can be recovered by error correction algorithms.

At the same time, transmitter B leaves empty the time slot used by transmitter A for its local radio station. Symbols having a frequency distribution of the type shown in Figure 4 are included in this area. These will cause some interference with symbols transmitted by transmitter A but this will be minimised because of the small number of carriers used and can be corrected using the usual error correction algorithms.

As previously stated, the number of carriers transmitted in an empty symbol must be chosen as a balance between the ruggedness required for the system at the receiver and the degree of interference which can be tolerated by other users of that time slot. As the number of carriers used increases, the resistance to multi-path interference increases and the possibility of a receiver detecting erroneous null symbol decreases. However, the interference with adjacent transmitters also increases.

The amplitudes used for the carriers must be increased above the normal value to ensure that the required amount of power is transmitted in each symbol to prevent it from being detected as a null symbol. For a DAB symbol a total power of around 10dB lower than a normal symbol is likely to be suitable. The exact amplitudes and phases selected can be chosen to minimise the difference between the peak and mean value of the time representation of the symbol. This is necessary to prevent amplifier overload problems from occurring.

Amplifier overload effects can also be reduced if the carriers are selected to lie on a regular spaced comb. The effect of this is to cause any intermodulation products generated by non-linear processes to fall on each other without generating additional interference. Additionally, use may be made of carrier locations which lie just outside the active carriers allocated to a symbol.

Once a suitable set of carriers has been selected these can be hardwired as an option in modulation equipment supplied to local broadcasters for use with DAB transmissions.

The reference and fast information channel data contained in the start of each COFDM frame will still have to be distributed to all co-channel transmitters. This information can, however, be skeletal, containing only information about the location of each channel in the COFDM frame and the audio and code rates. The data could be held in a ROM at the transmitter and synchronised as necessary from national DAB services. This would prevent the need for any local operator to distribute common signals to transmitters.

Using such a system enables each broadcaster to transmit only its own programs and to leave the rest of the DAB multiplex empty. This would enable local and regional broadcasters to transmit in the same portion of the frequency spectrum in the same area by using a system of on-air multiplexing with empty symbols containing a few powerful carriers. Local broadcasters can then retain control over all the information content in the service without being dependent on the network operator. All that is required is for local transmitters to be synchronised. The information required for this can be picked up by the local broadcasters from the national DAB service.

The system proposed also enables local broadcasters to site their transmitters and choose their transmission powers to target service areas which may be different from those of their competitors. In a conventional time windows approach all transmitters would be sending out all the programs for a particular area thus giving universal coverage.

Another advantage which arises from using a DAB multiplex on less than full power, i.e. only using a portion of the multiplex for program information, leads to cost savings. This is because significantly less power is being radiated in unused portions of the COFDM frame thus reducing the electricity cost of running the amplifiers in the transmitter.

In order to use this extended time windows approach, careful area coverage planning is necessary to prevent large differences in signal levels between different co-frequency components in a block. Some of these may be accommodated by the automatic gain control of the receiver but large differences may cause errors in reception.

Each chunk of data which is included in an on-air multiplex requires an additional dummy DAB symbol for use as a valid phase reference. If all signals were combined prior to transmission then a single dummy symbol would be appropriate. This, of course, reduces the spectral efficiency of the system.

It will, of course, be appreciated that local radio signals transmitted using this system require no modification to be made to receivers used for a national single frequency network DAB transmission. All the data concerning positions of signals, audio and code rates is included in the reference information at the start of each COFDM symbol and a dummy phase reference signal included at the start of each data portion. However, the detection of this comb of carriers by receivers would be possible and could be used by the receivers to identify networks which radiate local radio signals using this technique. This information could be used by the receiver to prevent the potentially annoying effect, as a car moves along, of receivers chopping and changing between local radio programmes.

It will be appreciated that the present invention can be applied to any digital broadcast system operating with COFDM and in particular can be used with digital television broadcasts.

## Claims

1. A method for transmitting a digital signal in a coded orthogonal frequency division multiplex (COFDM) signal as a series of time frames, each frame comprising a plurality of time domain symbols derived from the orthogonal frequency division multiplex of at least one digital signal, the frames being separated by null symbols used for synchronisation by receivers, the method comprising the steps of assigning a group of symbols in each frame to each digital signal to be transmitted by that transmitter, leaving empty of data symbols to be used for other digital signals by adjacent transmitters, and inserting sufficient power in each empty symbol to raise its power level above the threshold for null symbol detection at a receiver.

2. A method for transmitting a digital signal in a COFDM signal according to claim 1 in which the step of inserting power into empty symbols comprises the step of retaining at least one of the carriers from which each symbol is derived in the frequency domain.

3. A method for transmitting COFDM. signal according to claim 2 in which a comb of carriers are retained across the frequency band from which each symbol is derived.

4. A method for transmitting a COFDM signal according to claim 2 or 3 in which the amplitude of retained carriers is greater than that used for data transmission.

5. A method for transmitting a COFDM signal according to claim 2, 3 or 4, wherein the amplitudes and phases of retained carriers are selected to minimise the difference between the peak and mean values of each symbol derived therefrom.

6. A system for transmitting digital signals in co-channel coded orthogonal frequency division multiplex (COFDM) signals when different digital signals are transmitted in adjacent areas, the transmissions comprising a series of (COFDM) frames, each frame comprising a plurality of time domain symbols derived from an orthogonal frequency division multiplex of the digital signal to be transmitted in each area, the frames being separated by null symbols used for synchronisation of receivers, wherein for each area signals to be transmitted only in that area are assigned a group of symbol in a frame which are unused in the or each adjacent area and each unused symbols has sufficient power inserted into it to raise its power level above the threshold for null symbol detection at a receiver.

7. A system for transmitting digital signals in co-channel COFDM signals according to claim 6 in which power is inserted into unused symbols by retaining at least one of the carriers from which each symbol is derived.

8. A system for transmitting digital signals in co-channel COFDM signals according to claim 7 in which a comb of carriers is retained across the frequency band from which each symbol is derived.

9. A system for transmitting digital signals in co-channel COFDM signals according to claim 7 or 8 in which the amplitude of retained carriers is greater than that used for data transmission.

10. A system for transmitting digital signals in co-channel COFDM signals according to claims 7, 8 or 9 in which the amplitudes and phases of retained carriers are selected to minimise the difference between peak and mean values of symbols derived therefrom.

11. A digital broadcast receiver for use in a coded orthogonal frequency division multiplex (COFDM) system including means for detecting carriers inserted into COFDM symbols which are empty of data.

## Patentansprüche

1. Verfahren zum Übertragen eines digitalen Signals in einem kodierten orthogonalen Frequenzmultiplex-(COFDM = Coded Orthogonal Frequency Division Multiplex)-Signal als eine Folge bzw. Serie von Zeitrahmen, wobei jeder Rahmen eine Mehrzahl von Zeitbereichssymbolen aufweist, welche aus dem orthogonalen Frequenzmultiplex von mindestens einem digitalen Signal erhalten werden, wobei die Rahmen durch Null-Symbole getrennt bzw. unterteilt werden, welche für die Synchronisation von den Empfängern verwendet werden, wobei das Verfahren die Schritte aufweist: Zuordnen bzw. Zuteilen einer Gruppe von Symbolen in jedem Rahmen zu jedem digitalen Signal, welches von diesem Sender bzw. der Übertragungsvorrichtung übertragen werden soll, Leer- bzw. Freilassen von Datensymbolen, welche für andere digitale Signale von benachbarten Sendern bzw. Übertragungsvorrichtungen verwendet werden, und Einfügen bzw. Zuführen einer ausreichenden Leistung in jedes leere bzw. freie Symbol, um dessen Leistungspegel über einen Grenzwert für eine Null-Symbolerkennung bei einem Empfänger anzuheben.

2. Verfahren zum Übertragen eines digitalen Signals in einem COFDM-Signal nach Anspruch 1, wobei der Schritt des Einfügens bzw. Zuführens der Leistung zu den Leer-Symbolen den Schritt aufweist, daß mindestens einer der Träger beibehalten bzw. aufrechterhalten wird, von welchem jedes Symbol bzw. die jeweiligen Symbole in dem Frequenzbereich erhalten wird.

3. Verfahren zum Übertragen eines COFDM-Signals nach Anspruch 2, wobei ein Kamm (comb) der Träger über das Frequenzband beibehalten bzw. aufrechterhalten wird, von welchem jedes Symbol erhalten wird.

4. Verfahren zum Übertragen eines COFDM-Signals nach Anspruch 2 oder 3, wobei die Amplitude der aufrechterhaltenen Träger größer ist als diejenige, welche für die Datenübertragung verwendet wird.

5. Verfahren zum Übertragen eines COFDM-Signals nach Anspruch 2, 3 oder 4, wobei die Amplituden und Phasen der aufrechterhaltenen Träger so ausgewählt werden, um die Differenz zwischen den Spitzen- und Mittelwerten eines jeden Symbols, welches davon erhalten bzw. daraus gewonnen wird, zu minimieren.

6. System zum Übertragen von digitalen Signalen in gleichkanal-(co-channel)-kodierten Orthogonal-Frequenz-Multiplex-(COFDM = Coded Orthogonal Frequency Division Multiplex)-Signalen, wenn unterschiedliche bzw. verschiedene digitale Signale in benachbarten Bereichen bzw. Flächen übertragen werden, wobei die Übertragungen eine Folge bzw. Serie von (COFDM)-Rahmen aufweisen, wobei jeder Rahmen eine Mehrzahl von Zeitbereichssymbolen aufweist, welche aus einem Orthogonal-Frequenz-Multiplex des in jedem Bereich zu übertragenden digitalen Signals erhalten bzw. gewonnen werden, wobei die Rahmen durch Null-Symbole getrennt bzw. unterteilt sind, welche für die Synchronisation der Empfänger verwendet werden, wobei jedem der Bereichs- bzw. Flächensignale, welche nur in diesem Bereich übertragen werden sollen, eine Gruppe von Symbolen in einem Rahmen zugeordnet ist, welche in dem oder den angrenzenden bzw. benachbarten Bereichen bzw. Flächen nicht verwendet werden und wobei jedes der nicht verwendeten Symbole ausreichend Leistung zugeführt hat bzw. trägt, damit sich dessen Leistungspegel über den Grenzwert für die Null-Symbolerkennung bei einem Empfänger erhebt bzw. angehoben wird.

7. System zum Übertragen von digitalen Signalen in Gleichkanal-COFDM-Signalen nach Anspruch 6, wobei die Leistung den nicht verwendeten Symbolen zugeführt bzw. eingefügt wird, indem mindestens einer der Träger beibehalten bzw. aufrechterhalten wird, von welchem jedes Symbol erhalten wird.

8. System zum Übertragen von digitalen Signalen in Gleichkanal-COFDM-Signalen nach Anspruch 7, wobei ein Kamm von Trägern über das Frequenzband aufrechterhalten wird, aus welchem jedes Symbol erhalten wird.

9. System zum Übertragen von digitalen Signalen in Gleichkanal-COFDM-Signalen nach Anspruch 7 oder 8, wobei die Amplitude der aufrechterhaltenen bzw. beibehalten Träger größer ist als diejenige, welche für die Datenübertragung verwendet wird.

10. System zum Übertragen von digitalen Signalen in Gleichkanal-COFDM-Signalen nach Anspruch 7, 8 oder 9, wobei die Amplituden und Phasen der aufrechterhaltenen Träger so ausgewählt werden, daß die Differenz zwischen den Spitzen- und Mittelwerten der Symbole, welche davon erhalten werden, minimiert wird.

11. Digitaler Rundfunkempfänger zur Verwendung bei bzw. mit einem System mit kodiertem Orthogonal-Frequenz-Multiplex (COFDM), umfassend eine Vorrichtung zum Detektieren von Trägern, welche in COFDM-Symbole eingefügt wurden, welche bezüglich Daten leer sind.

## Revendications

1. Un procédé pour transmettre un signal numérique dans un signal en multiplex par répartition en fréquence de type orthogonal codé (ou COFDM), sous la forme d'une série de trames temporelles, chaque trame comprenant un ensemble de symboles du domaine temporel élaborés à partir du multiplex par répartition en fréquence orthogonal d'au moins un signal numérique, les trames étant séparées par des symboles nuls qui sont utilisés pour la synchronisation par des récepteurs, le procédé comprenant les étapes qui consistent à affecter un groupe de symboles dans chaque trame à chaque signal numérique à transmettre par l'émetteur considéré, en laissant des symboles vides de données, à utiliser pour d'autres signaux numériques par des émetteurs adjacents, et à introduire une puissance suffisante dans chaque symbole vide pour élever son niveau de puissance au-dessus du seuil pour la détection d'un symbole nul à un récepteur.

2. Un procédé pour transmettre un signal numérique dans un signal en COFDM selon la revendication 1, dans lequel l'étape d'introduction de puissance dans des symboles vides comprend l'étape qui consiste à conserver dans le domaine des fréquence l'une au moins des porteuses à partir desquelles chaque symbole est élaboré.

3. Un procédé pour transmettre un signal en COFDM selon la revendication 2, dans lequel un peigne de porteuses est conservé sur la bande de fréquence à partir de laquelle chaque symbole est élaboré.

4. Un procédé pour transmettre un signal en COFDM selon la revendication 2 ou 3, dans lequel l'amplitude de porteuses conservées est supérieure à celle qui est utilisée pour la transmission de données.

5. Un procédé pour transmettre un signal en COFDM selon la revendication 2, 3 ou 4, dans lequel les amplitudes et les phases de porteuses conservées sont sélectionnées de façon à minimiser la différence entre les valeurs de crête et moyenne de chaque symbole qui est élaboré à partir de celles-ci.

6. Un système pour transmettre des signaux numériques dans des signaux en multiplex par répartition en fréquence de type orthogonal codé (ou COFDM) dans des canaux communs, lorsque différents signaux numériques sont transmis dans des zones adjacentes, les transmissions comprenant une série de trames (COFDM), chaque trame comprenant un ensemble de symboles dans le domaine temporel qui sont élaborés à partir d'un multiplex par répartition en fréquence orthogonal du signal numérique à transmettre dans chaque zone, les trames étant séparées par des symboles nuls qui sont utilisés pour la synchronisation de récepteurs, dans lequel pour chaque zone, des signaux à transmettre seulement dans cette zone sont affectés à un groupe de symboles dans une trame qui sont inutilisés dans la zone adjacente ou dans chacune d'elles, et une puissance suffisante est introduite dans chaque symbole inutilisé, pour élever son niveau de puissance au-dessus du seuil pour la détection d'un symbole nul à un récepteur.

7. Un système pour transmettre des signaux numériques dans des signaux en COFDM dans des canaux communs, selon la revendication 6, dans lequel de la puissance est introduite dans des symboles inutilisés en conservant l'une au moins des porteuses à partir desquelles chaque symbole est élaboré.

8. Un système pour transmettre des signaux numériques dans des signaux en COFDM dans des canaux communs, selon la revendication 7, dans lequel un peigne de porteuses est conservé sur la bande de fréquence à partir de laquelle chaque symbole est élaboré.

9. Un système pour transmettre des signaux numériques dans des signaux en COFDM dans des canaux communs, selon la revendication 7 ou 8, dans lequel l'amplitude de porteuses conservées est supérieure à celle qui est utilisée pour la transmission de données.

10. Un système pour transmettre des signaux numériques dans des signaux en COFDM dans des canaux communs, selon les revendications 7, 8 ou 9, dans lequel les amplitudes et les phases de porteuses conservées sont sélectionnées de façon à minimiser la différence entre les valeurs de crête et moyenne de symboles qui sont élaborés à partir de celles-ci.

11. Un récepteur de radiodiffusion numérique prévu pour l'utilisation dans un système en multiplex par répartition en fréquence de type orthogonal codé (COFDM), comprenant des moyens pour détecter des porteuses qui sont introduites dans des symboles en COFDM qui ne contiennent pas des données.
